# EUROPÄISCHE PATENTSCHRIFT

(11) **EP 2 513 191 B1**
(45) Veröffentlichungstag und Bekanntmachung des Hinweises auf die Patenterteilung: **16.03.2016**
(21) Anmeldenummer: 10788089.0
(22) Anmeldetag: 14.12.2010
(51) Int. Cl.: C08G 65/00

(54) **VERBESSERTE BLENDS AUS POLYARYLENETHERN UND POLYARYLENSULFIDEN**
IMPROVED BLENDS OF POLYARYLENE ETHERS AND POLYARYLENE SULPHIDES
MÉLANGES AMÉLIORÉS COMPOSÉS D'ESTERS DE POLYARYLÈNES ET DE SULFURES DE POLYARYLÈNES

(30) Priorität: 17.12.2009 EP 09179646
(43) Veröffentlichungstag der Anmeldung: 24.10.2012
(73) Patentinhaber: BASF SE, 67056 Ludwigshafen (DE)
(72) Erfinder: WEBER, Martin, 67487 Maikammer (DE); MALETZKO, Christian, 67122 Altrip (DE); ZEIHER, Susanne, 67071 Ludwigshafen (DE); VÖLKEL, Mark, 68526 Ladenburg (DE); GÜNTHERBERG, Norbert, 67346 Speyer (DE); BLUHM, Rüdiger, 67117 Limburgerhof (DE)
(86) Internationale Anmeldenummer: PCT/EP2010/069644
(87) Internationale Veröffentlichungsnummer: WO 2011/073196

(56) Entgegenhaltungen:
- EP-A1- 0 855 428
- EP-A1- 0 855 429
- EP-A2- 0 903 376

## Beschreibung

Die vorliegende Erfindung betrifft thermoplastische Formmassen gemäß Anspruch 1 enthaltend folgende Komponenten:
(A) von 20 bis 79 Gew.-% mindestens einen Polyarylenether,
(B) von 5 bis 64 Gew.-% mindestens ein Polyarylensulfid,
(C) von 1 bis 15 Gew.-% mindestens eines funktionalisierten Polyarylenether umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C,
(D) von 15 bis 70 Gew.-% mindestens eines faser- oder teilchenförmigen Füllstoffs und
(E) von 0 bis 40 Gew.-% eines weiteren Zusatzstoffs und/oder Verarbeitungshilfsmittels,
wobei die Summe der Gew.-% der Komponenten (A) bis (E) 100 Gew.-% beträgt.

Darüber hinaus betrifft die vorliegende Erfindung ein Verfahren gemäß Anspruch 13 zur Herstellung der erfindungsgemäßen thermoplastischen Formmassen, deren Verwendung gemäß Anspruch 15 zur Herstellung von Fomriteilen sowie die Verwendug gemäß Anspruch 14 von funktionalisierten Polyarylenethern umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C zur Erhöhung der Reißdehnung und zur Verbesserung der Schlagzähigkeit.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen. Polyarylenether sind amorph und weisen daher oft eine unzureichende Beständigkeit gegenüber aggressiven Medien auf. Weiterhin weisen Polyarylenether auch eine hohe Schmelzeviskosität auf, was besonders die Verarbeitung zu großen Formteilen mittels Spritzguss beeinträchtigt. Die hohe Schmelzeviskosität ist insbesondere nachteilig bei der Herstellung von Formmassen mit hoher Füllstoff- oder Faserbeladung.

Aus der EP-A 673 973 ist bekannt, dass Polymermischungen aus Polyarylenethern und Polyphenylensulfid eine verbesserte Fließfähigkeit und eine gute Chemikalienbeständigkeit aufweisen.

Aus der EP-A 855 428 sind kautschukhaltige Polyarylenether bekannt, welche Carboxylgruppen-haltige funktionalisierte Polyarylenether zur Verbesserung der Zähigkeit und der Chemikalienbeständigkeit enthalten.

Gegenstand der EP-A 903 376 sind thermoplastische Formmassen enthaltend Polyarylenether, Polyarylensulfid und Kautschuk, welche ebenfalls zusätzlich funktionalisierte Polyarylenether enthalten. Die in der EP-A 903 376 verwendeten funktionalisierten Polyarylenether sind jedoch hinsichtlich ihrer Eignung für verstärkte Formmassen oft unzureichend. Die Verwendung solcher Produkte führt in gefüllten, insbesondere faserverstärkten Formmassen oft zu unzureichenden mechanischen Eigenschaften, insbesondere zu einer unzureichenden Zähigkeit und Reißfestigkeit sowie zu einer unzureichenden Temperaturbeständigkeit der mechanischen Eigenschaften.

Die Aufgabe der vorliegenden Erfindung bestand demzufolge darin, thermoplastische Formmassen auf Basis von Polyarylenethern mit guter Verarbeitbarkeit bereitzustellen, welche die vorgenannten Nachteile nicht oder in geringerem Umfang aufweisen. Insbesondere sollten die thermoplastischen Formmassen eine gute Verarbeitbarkeit, insbesondere gute Fließfähigkeit, bei gleichzeitig guten mechanischen Eigenschaften, insbesondere eine hohe Zähigkeit, eine hohe Schlagzähigkeit, eine hohe Reißfestigkeit und ein hohes E-Modul, aufweisen. Die vorgenannten Eigenschaften sollten im Rahmen einer Wärmealterung möglichst beständig sein.

Die vorgenannten Aufgaben werden gelöst durch die erfindungsgemäßen thermoplastischen Formmassen, das Verfahren zu deren Herstellung sowie durch die Verwendung gemäß Anspruch 14 von funktionalisierten Polyarylenethern umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Die erfindungsgemäßen thermoplastischen Formmassen gemäß Anspruch 1 enthalten folgende Komponenten:
(A) von 20 bis 79 Gew.-% mindestens einen Polyarylenether,
(B) von 5 bis 64 Gew.-% mindestens ein Polyarylensulfid,
(C) von 1 bis 15 Gew.-% mindestens eines funktionalisierten Polyarylenether umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C,
(D) von 15 bis 70 Gew.-% mindestens eines faser- oder teilchenförmigen Füllstoffs und
(E) von 0 bis 40 Gew.-% eines weiteren Zusatzstoffs und/oder Verarbeitungshilfsmittels,
wobei die Summe der Gew.-% der Komponenten (A) bis (E) 100 Gew.-% beträgt.

Die Polyarylenether der Komponente (A) unterscheiden sich vorzugsweise von denen der Komponente (C), wobei sie insbesondere nicht mit Carboxylgruppen funktionalisiert sind.

Die erfindungsgemäßen thermoplastischen Formmassen enthalten besonders bevorzugt von 20 bis 69 Gew.-% der Komponente (A), von 5 bis 54 Gew.-% der Komponente (B), von 1 bis 10 Gew.-% der Komponente (C), von 25 bis 65 Gew.-% der Komponente (D) und von 0 bis 30 Gew.-% der Komponente (E), wobei die Summe der Gew.-% der Komponenten (A) bis (E) 100 Gew.-% beträgt.

Die einzelnen Komponenten werden im Folgenden näher erläutert.

### Komponente A

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (A) in Betracht.

Im Rahmen der Komponente (A) bevorzugte Polyarylenether sind aus Bausteinen der allgemeinen Formel I aufgebaut: 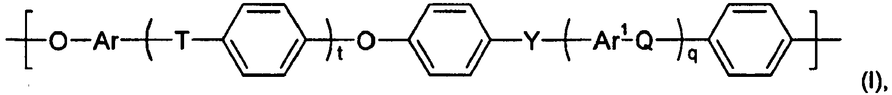 wobei die Symbole t, q, Q, T, Y, Ar und Ar¹ folgenden Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cyccloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Im Rahmen der Komponente (A) vorzugsweise vorliegende Bausteine sind solche, die mindestens eine der folgenden wiederkehrenden Struktureinheiten Ia bis Io enthalten:

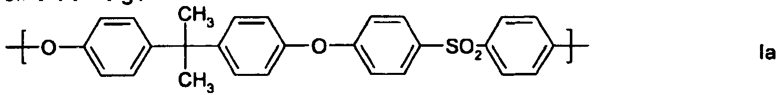

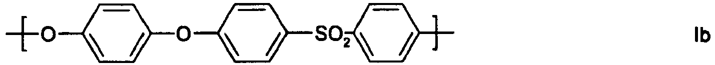

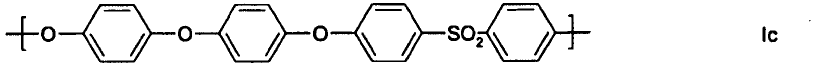

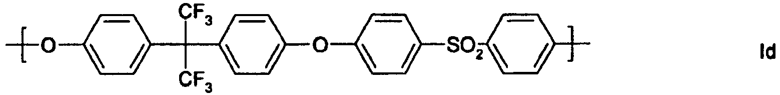

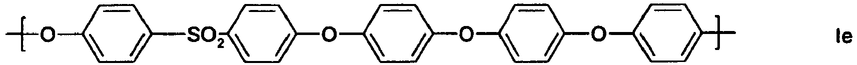

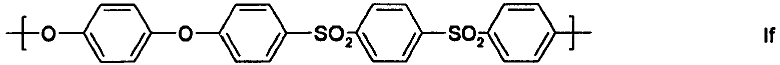

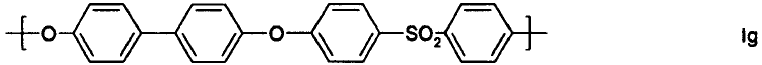

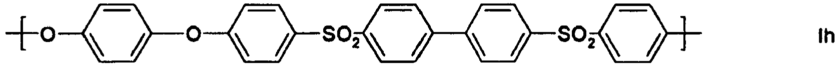

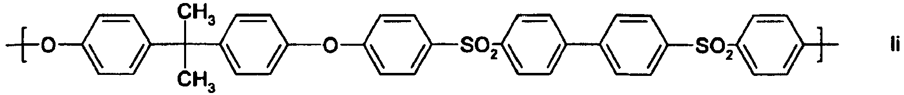

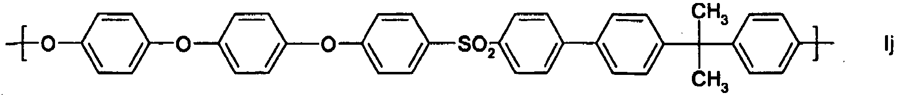

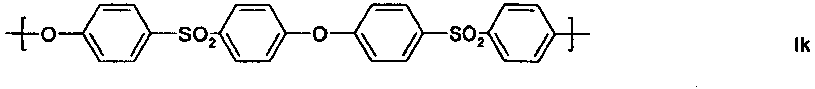

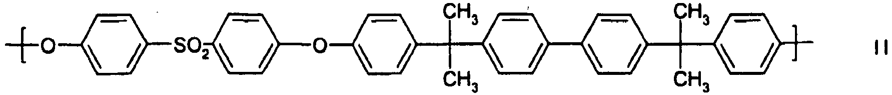

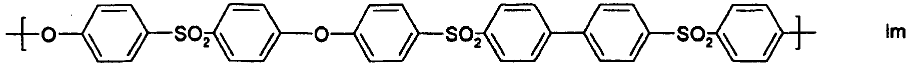

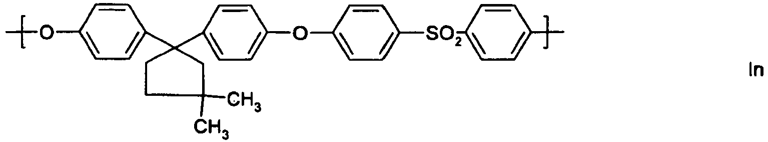

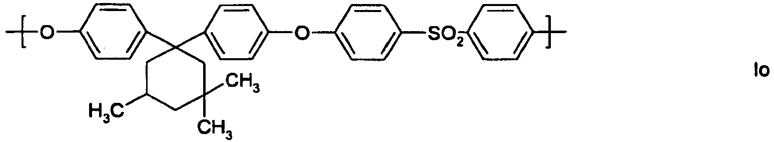

Zusätzlich zu den bevorzugt vorliegenden Bausteinen la bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine Ia, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone werden als Polyphenylensulfon (PPSU) bezeichnet.

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone werden als Polysulfon (PSU) bezeichnet.

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone werden als Polyethersulfon (PESU) bezeichnet. Diese Ausführungsform ist ganz besonders bevorzugt.

Abkürzungen wie PPSU, PESU und PSU entsprechen im Rahmen der vorliegenden Erfindung der DIN EN ISO 1043-1:2001.

Im Allgemeinen weisen die bevorzugten Polyarylenether (A) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (A) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Herstellungsverfahren, die zu den vorgenannten Polyarylenethern führen, sind dem Fachmann bekannt und beispielsweise in Herman F. Mark, "Encyclopedia of Polymer Science and Technology", third edition, Volume 4, 2003 auf den Seiten 2 bis 8 sowie in Hans R. Krichelsdorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Es ist bevorzugt, wenn die Polyarylenether der Komponente (A) im Wesentlichen keine freien OH-Gruppen aufweisen. Vorzugsweise weisen die Polyarylenether entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A) sind Halogen, insbesondere Chlor, Alkoxy, insbesondere Methoxy, Aryloxy, insbesondere Phenoxy, oder Benzyloxy.

### Komponente B

Die erfindungsgemäßen Formmassen enthalten als Komponente (B) mindestens ein Polyarylensulfid. Als Komponente (B) kommen prinzipiell alle Polyarylensulfide in Betracht.

Vorzugsweise bestehen die Polyarylensulfide der Komponente (B) von 30 bis 100 Gew.-% aus Wiederholungseinheiten gemäß der allgemeinen Formel -Ar-S-, wobei - Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten III 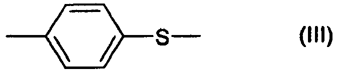 bezogen auf das Gesamtgewicht aller Wiederholungseinheiten enthalten. Geeignete weitere Wiederholungseinheiten sind insbesondere 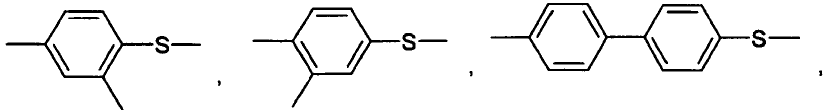 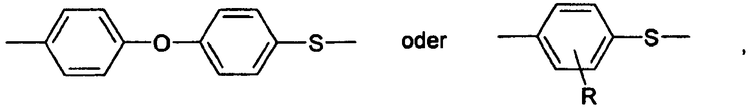 worin R C₁- bis C₁₀-Alkyl, bevorzugt Methyl bedeutet. Die Polyarylensulfide können Homopolymere, statistische Copolymere oder Blockcopolymere sein, wobei Homopolymere (identische Wiederholungseinheiten) bevorzugt sind. Ganz besonders bevorzugte Polyarylensulfide bestehen zu 100 Gew.-% aus Wiederholungseinheiten gemäß der allgemeinen Formel III. Besonders bevorzugt ist Komponente (B) somit ein Polyphenylensulfid, insbesondere Poly(1,4-phenylensulfid).

Als Endgruppen der erfindungsgemäß verwendeten Polyarylensulfide kommen insbesondere Halogen, Thiol oder Hydroxy, bevorzugt Halogen in Betracht.

Die Polyarylensulfide der Komponente (B) können verzweigt oder unverzweigt sein. Vorzugsweise sind die Polyarylensulfide der Komponente (B) linear, d. h. nicht verzweigt.

Die Polyarylensulfide der Komponente (B) weisen vorzugsweise gewichtsmittlere Molekulargewichte von 5.000 bis 100.000 g/mol auf.

Derartige Polyarylensulfide sind an sich bekannt oder können nach bekannten Methoden hergestellt werden. Entsprechende Herstellungsmethoden sind beispielsweise in Hans R. Krichelsdorf, "Aromatic Polyethers" in: Handbook of Polymer Synthesis, second edition, 2005 auf den Seiten 486 bis 492 beschrieben.

Insbesondere können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in der US 3,699,087 und in der US 4,645,826 beschrieben.

### Komponente C

Erfindungsgemäß enthalten die thermoplastischen Formassen mindestens einen funktionalisierten Polyarylenether umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C. Die Viskositätszahl gemäß DIN EN ISO 1628-1 der funktionalisierten Polyarylenether der Komponente (C) gemessen in 1 gew.-%iger Lösung in N-Methyl-2-pyrrolidon bei 25°C beträgt vorzugsweise mindestens 46 ml/g, besonders bevorzugt mindestens 47 ml/g, insbesondere mindestens 48 ml/g.

Andererseits führt die Verwendung von Polyarylenethern umfassend Carboxylgruppen mit einer Viskositätszahl gemäß DIN EN ISO 1628-1 von mehr als 65 ml/g gemessen in 1 gew.-%iger Lösung in N-Methyl-2-pyrrolidon bei 25°C zu einer nachteiligen Reduktion der Fließfähigkeit, ohne dass eine weitere Verbesserung der mechanischen Eigenschaften erhalten wird. Dementsprechend ist die Viskositätszahl gemäß DIN EN ISO 1628-1 der Polyarylenether der Komponente (C) nach oben beschränkt und beträgt erfindungsgemäß höchstens 65 ml/g, bevorzugt höchstens 61 ml/g, insbesondere höchstens 57 ml/g, jeweils gemessen in 1 gew.-%iger Lösung in N-Methyl-2-pyrrolidon bei 25°C.

Eine Viskositätszahl im angegebenen Bereich führt in thermoplastischen Formmassen auf Basis von Polyarylenethern und Polyarylensulfiden enthaltend teilchen- oder faser-förmige Füllstoffe zu den erfindungsgemäß verbesserten mechanischen Eigenschaften bei gleichzeitig guter Verarbeitbarkeit. Ohne sich einschränken zu wollen, besteht die Vorstellung, dass die funktionalisierten Polyarylenether der Komponente (C) aufgrund ihrer chemischen Struktur und der definierten Viskositätszahl synergistisch mit den Füllstoffen, insbesondere Glasfasern, wechselwirken.

Vorzugsweise enthalten die erfindungsgemäßen thermoplastischen Formmassen als Komponente (C) mindestens einen funktionalisierten Polyarylenether, der Bausteine der allgemeinen Formel I wie oben definiert sowie Bausteine der allgemeinen Formel II enthält: 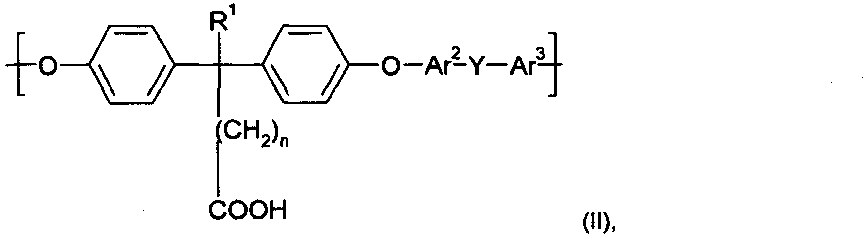 worin
- n: 0, 1, 2, 3, 4, 5 oder 6 ist;
- R¹: Wasserstoff, eine C₁ bis C₆-Alkylgruppe, oder -(CH₂)ₙ-COOH bedeutet;
- Ar² und Ar³: gleich oder unterschiedlich sein können und unabhängig voneinander eine C₆ bis C₁₈-Arylengruppe darstellen und
- Y: eine chemische Bindung oder Gruppe wiedergibt, die ausgewählt ist aus -O-, -S-, -SO₂-, S=O, C=O, -N=N- und -CR^{a}R^{b}-, wobei R^{a} und R^{b} gleich oder ungleich sein können und unabhängig voneinander jeweils für ein Wasserstoffatom oder eine C₁-C₁₂-Alkyl-, C₁-C₁₂-Alkoxy- oder C₆ bis C₁₈-Arylgruppe stehen.

Vorzugsweise beträgt der Anteil von Bausteinen gemäß der allgemeinen Formel II bezogen auf die Summe der Bausteine gemäß Formel I und Formel II von 0,5 bis 3 mol-%, vorzugsweise von 0,6 bis 2 mol-%, besonders bevorzugt von 0,7 bis 1,5 mol-%.

Der Anteil von Bausteinen gemäß der allgemeinen Formel II bezogen auf die Summe der Bausteine gemäß Formel I und Formel II wird im Rahmen der vorliegenden Erfindung grundsätzlich mittels ¹H-NMR-Spektroskopie mit einer definierten Menge 1,3,5-Trimethoxybenzol als interner Standard bestimmt. Die Umrechnung von Gew.-% in mol-% ist dem Fachmann bekannt.

Im Rahmen der allgemeinen Formel II gilt vorzugsweise n = 2 und R¹ = Methyl.

Im Rahmen der allgemeinen Formel II gilt zudem vorzugsweise Ar² = Ar³ = 1,4-Phenylen und Y = -SO₂-.

Die in den erfindungsgemäßen Formmassen verwendeten, funktionalisierten Polyarylenether (Komponente C) sind an sich bekannte Verbindungen oder sind nach bekannten Verfahren herstellbar.

Beispielsweise sind die funktionalisierten Polyarylenether der Komponente (C) zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach insbesondere erhältlich durch Polykondensation von Verbindungen der allgemeinen Formel IV: 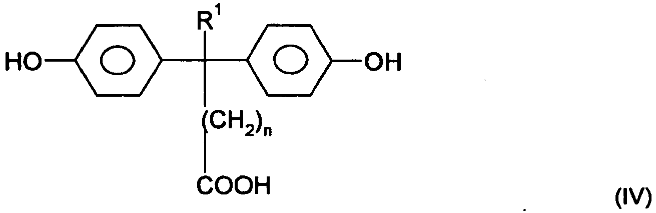 worin R¹ und n die oben angegebenen Bedeutungen besitzen, mit wenigstens einer weiteren gegenüber den Verbindungen der allgemeinen Formel IV reaktiven aromatischen Verbindung, wie insbesondere 4,4'-Dichlordiphenylsulfon, und gegebenenfalls weiteren hydroxyfunktionalisierten Verbindungen, wie z.B. Bisphenol A und/oder Bisphenol S und/oder 4,4'-Dihydroxybiphenyl. Geeignete Reaktionspartner sind dem Fachmann allgemein bekannt.

Zur Herstellung der funktionalisierten Polyarylenether der Komponente (C) können prinzipiell auch die für Polyarylenether der Komponente (A) verwendeten Methoden eingesetzt werden, wobei ebenfalls die Lösungspolymerisation in dipolar aprotischen Lösungsmitteln unter Baseneinwirkung bevorzugt wird.

Die Ausführungen bezüglich Komponente (A) hinsichtlich bevorzugter Strukturelemente der allgemeinen Formel I gelten entsprechend für die funktionalisierten Polyarylenether der Komponente (C).

Insbesondere ist es bevorzugt, wenn die Polyarylenether der Komponenten (A) und (C) strukturell ähnlich sind, insbesondere auf den gleichen Monomerbausteinen basieren und sich lediglich in Bezug auf die Bausteine der allgemeinen Formel II im Rahmen der Komponente (C) unterscheiden. Es ist besonders bevorzugt, wenn sowohl Komponente (A) als auch Komponente (C) auf Bausteinen des Typs PESU wie oben definiert oder wenn sowohl Komponente (A) als auch Komponente (C) auf Bausteinen des Typs PPSU wie oben definiert oder wenn sowohl Komponente (A) als auch Komponente (C) auf Bausteinen des Typs PSU wie oben definiert basieren. Unter "basieren° ist in diesem Zusammenhang zu verstehen, dass sowohl Komponente (A) als auch Komponente (C) aus den gleichen Bausteinen aufgebaut sind und sich lediglich dadurch unterscheiden, dass die Komponente (C) zusätzlich funktionalisiert ist und vorzugsweise Monomerbausteine der allgemeinen Formel II wie oben definiert enthält. Besonders bevorzugt enthalten die Polyarylenether der Komponente (A) und die funktionalisierten Polyarylenether der Komponente (C) jeweils die gleichen Bausteine der allgemeinen Formel I.

Geeignete Bausteine im Rahmen der allgemeinen Formel II sind insbesondere: 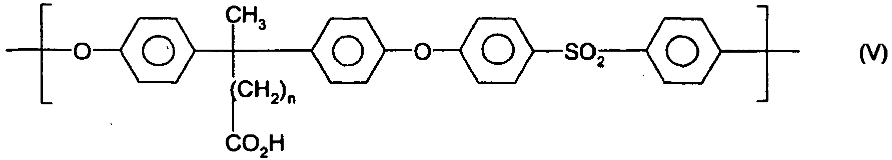 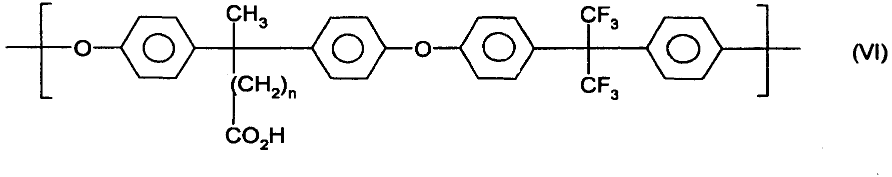 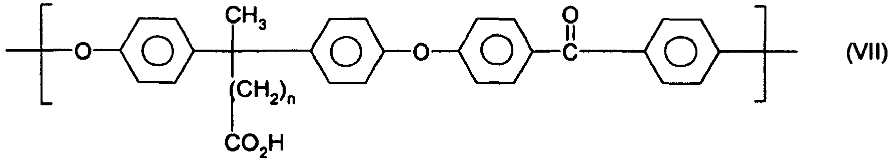 worin n jeweils für eine ganze Zahl von 0 bis 4 steht. Der Baustein V ist ganz besonders bevorzugt.

### Komponente D

Die thermoplastischen Formmassen der vorliegenden Erfindung enthalten als Komponente (D) mindestens einen faser- oder teilchenförmigen Füllstoff, vorzugsweise in einer Menge von 15 bis 70 Gew.-%, besonders bevorzugt von 20 bis 70 Gew.-%, insbesondere von 25 bis 65 Gew.-%, bezogen auf insgesamt 100 Gew.-% der Komponenten (A) bis (E).

Die erfindungsgemäßen Formmassen können insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Kohlenstoff- und Glasfasern einen Durchmesser im Bereich von 6 bis 20 µm. Komponente (D) besteht somit besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die thermoplastischen Formmassen können außerdem weitere Zusatzstoffe und/oder Verarbeitungshilfsmittel als Komponente E enthalten.

### Komponente E

Die erfindungsgemäßen Formmassen können als Bestandteile der Komponente (E) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (E) in der erfindungsgemäßen Formmasse beträgt insbesondere von 0 bis zu 30, vorzugsweise von 0 bis zu 20 Gew.-%, insbesondere 0 bis 15 Gew.-%, bezogen auf das Gesamtgewicht der Komponenten (A) bis (E). Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (E), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Fumace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (E) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (E) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (E)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (E) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

Die Reihenfolge, in der die Komponenten (A) bis (E) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Ein weiterer Gegenstand der vorliegenden Erfindung ist die Verwendung gemäß Anspruch 14 von funktionalisierten Polyarylenethern umfassend Carboxylgruppen mit einer Viskositätszahl von 45 bis 65 ml/g gemessen in 1 gew.-%iger Lösung in N-Methyl-2-pyrrolidon bei 25°C in Zusammensetzungen enthaltend mindestens einen Polyarylenether und mindestens ein Polyarylensulfid zur Erhöhung der Reißdehnung oder zur Verbesserung der Schlagzähigkeit.

Die folgenden Beispiele erläutern die Erfindung näher, ohne sie einzuschränken.

### Beispiele

Die E-Moduli, die Reißfestigkeit und die Reißdehnung der Proben wurden im Zugversuch nach ISO 527 an Schulterstäben ermittelt.

Die Schlagzähigkeit der Produkte wurde an ISO-Stäben nach ISO 179 1eU bestimmt.

Die Fließfähigkeit wurde anhand der Schmelzeviskosität beurteilt. Die Schmelzestabilität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1000 Hz bestimmten Werte.

Außerdem wurde die Wärmealterung der Produkte untersucht. Dazu wurden Zugstäbe über einen Zeitraum von 500 Stunden bei 180°C im Umluftschrank gelagert und anschließend geprüft.

Die Viskositätszahl der Polyarylenether wurde in 1 %-iger Lösung von N-Methylpyrrolidon bei 25°C gemäß DIN EN ISO 1628-1 bestimmt.

### Komponente A1

Als Komponente A1 wurde ein Polyethersulfon des Typs PESU mit einer Viskositätszahl von 49,0 ml/g (Ultrason® E 1010 der BASF SE) verwendet. Das verwendete Produkt wies 0,16 Gew.-% Cl-Endgruppen und 0,21 Gew.-% OCH₃-Endgruppen auf.

### Komponente B1

Als Komponente B1 wurde ein Polyphenylensulfid mit einer Schmelzeviskosität von 145 Pa*s bei 330°C und einer Scherrate von 1000 Hz verwendet.

### Komponente C1

Als Komponente C1 wurde ein funktionalisiertes Polyethersulfon verwendet, welches wie folgt hergestellt wurde:
Unter Stickstoffatmosphäre wurden 577,03 g Dichlordiphenylsulfon, 495,34 g Dihydroxydiphenylsulfon und 5,73 g 4,4'-Bis-hydroxyphenylvaleriansäure ("DPA") in 1053 ml NMP gelöst und mit 297,15 g wasserfreiem Kaliumkarbonat versetzt. Die Reaktionsmischung wurde auf 190°C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde mittels ¹H-NMR-Spektroskopie mit 1,3,5-Trimethoxybenzol als internem Standard zu 0,9 mol-% bestimmt, die Viskositätszahl des Produkts war 46,9 ml/g.

### Komponente C2

Als Komponente C2 wurde ein Polyethersulfon verwendet, welches wie folgt hergestellt wurde:
Unter Stickstoffatmosphäre wurden 574,16 g Dichlordiphenylsulfon, 487,83 Dihydroxydiphenylsulfon und 14,32 g 4,4'-Bis-hydroxyphenylvaleriansäure ("DPA") in 1053 ml NMP gelöst und mit 290,24 g wasserfreiem Kaliumkarbonat versetzt. Die Reaktionsmischung wurde auf 190°C erhitzt und 7 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde zu 1,1 mol-% bestimmt, die Viskositätszahl des Produkts war 37,1 ml/g.

### Komponente C3

Als Komponente C3 wurde ein Polyethersulfon verwendet, welches wie folgt hergestellt wurde:
Unter Stickstoffatmosphäre wurden 579,90 g Dichlordiphenylsulfon, 492,83 Dihydroxydiphenylsulfon und 8,59 g 4,4'-Bis-hydroxyphenylvaleriansäure ("DPA") in 1053 ml NMP gelöst und mit 297,15 g wasserfreiem Kaliumkarbonat versetzt. Die Reaktionsmischung wurde auf 190°C erhitzt und 6 h bei dieser Temperatur gehalten. Anschließend wurde der Ansatz mit 1947 ml NMP verdünnt. Nach Abkühlen auf T < 80°C wurde die Suspension abgelassen. Durch Filtration wurden dann die unlöslichen Bestandteile abgetrennt. Die erhaltene Lösung wurde dann in Wasser gefällt. Das erhaltene weiße Pulver wurde dann mehrfach mit heißem Wasser extrahiert und anschließend bei 140°C im Vakuum getrocknet. Der Anteil an DPA-Einheiten wurde zu 1,3 mol-% bestimmt, die Viskositätszahl des Produkts war 44,4 ml/g.

### Komponente D1

Als Komponente D1 wurden Schnittglasfasern mit einer Stapellänge von 4,5 mm und einem Faserdurchmesser von 10 µm eingesetzt, die mit einer Polyurethanschlichte versehen waren.

**Tabelle 1: Eigenschaften der Blends aus Polyarylenethern und Polyarylensulfiden. Die Zusammensetzung der thermoplastischen Formmassen ist in Gewichtsteilen angegeben.**

| Versuch | V1 | V2 | V3 | V4 | 5 | 6 | V7 | 8 |
|---|---|---|---|---|---|---|---|---|
| Komponente A1 | 70 | 41 | 36 | 36 | 36 | 33,5 | 36 | 31 |
| Komponente B1 | - | 14 | 14 | 14 | 14 | 14 | 19 | 19 |
| Komponente C1 | - | - | - | - | 5 | 7,5 | - | 5 |
| Komponente C2 | - | - | 5 | - | - | - | - | - |
| Komponente C3 | - | - | - | 5 | - | - | - | - |
| Komponente D | 30 | 45 | 45 | 45 | 45 | 45 | 45 | 45 |
| E-Modul [GPa] | 9,40 | 16,5 | 16,5 | 16,3 | 16,4 | 16,5 | 17,0 | 16,9 |
| Reißdehnung [%] | 2,3 | 1,4 | 1,6 | 1,5 | 1,9 | 1,9 | 1,3 | 1,6 |
| Reißfestigkeit [MPa] | 134 | 148 | 148 | 152 | 162 | 167 | 156 | 171 |
| ISO 179 1eU [kJ/m²] | 47 | 42 | 45 | 48 | 52 | 54 | 38 | 46 |
| Viskosität bei 1000 Hz (350°C) | 684 | 552 | 532 | 540 | 553 | 536 | 482 | 492 |
| Test nach 500 h/180°C: E-Modul [GPa] | 9,5 | 16,7 | 16,3 | 16,4 | 16,6 | 16,6 | 17,1 | 17,3 |
| Reißfestigkeit [MPa] | 112 | 118 | 120 | 121 | 151 | 154 | 126 | 158 |

Die erfindungsgemäßen Formmassen zeichnen sich durch gute mechanische Eigenschaften bei gleichzeitig günstiger Verarbeitbarkeit aus. Die erfindungsgemäßen Formmassen weisen insbesondere eine hohe Reißfestigkeit auf. Die verbesserte Reißfestigkeit kommt insbesondere in einem vergleichsweise besonders günstigen Wert nach Wärmealterung zum Ausdruck.

## Patentansprüche

1. Thermoplastische Formmassen enthaltend folgende Komponenten:
(A) von 20 bis 79 Gew.-% mindestens einen Polyarylenether,
(B) von 5 bis 64 Gew.-% mindestens ein Polyarylensulfid,
(C) von 1 bis 15 Gew.-% mindestens eines funktionalisierten Polyarylenether umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C,
(D) von 15 bis 70 Gew.-% mindestens eines faser- oder teilchenförmigen Füllstoffs und
(E) von 0 bis 40 Gew.-% eines weiteren Zusatzstoffs und/oder Verarbeitungshilfsmittels,
wobei die Summe der Gew.-% der Komponenten (A) bis (E) 100 Gew.-% beträgt.

2. Thermoplastische Formmassen nach Anspruch 1, wobei die Polyarylenether der Komponente (A) aufgebaut sind aus Bausteinen der allgemeinen Formel I: 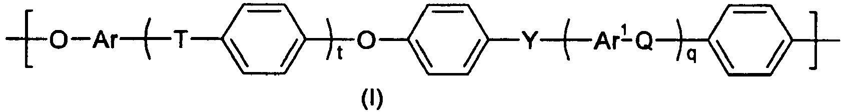 wobei die Symbole t, q, Q, T, Y, Ar und Ar¹ folgenden Bedeutungen aufweisen:
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N- und -CR^{a}R^{b}-, wobei R^{a} und R^{b} gleich oder unterschiedlich sein können und unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
Ar, Ar¹: unabhängig voneinander eine Arylengruppe mit von 6 bis 18 Kohlenstoffatomen.

3. Thermoplastische Formmassen nach Anspruch 2, wobei Q, T und Y in Formel I unabhängig voneinander ausgewählt sind aus -O- und -SO₂- und wenigstens eines aus Q, T und Y für -SO₂- steht.

4. Thermoplastische Formmassen nach den Ansprüchen 2 oder 3, wobei Ar und Ar¹ in Formel I unabhängig voneinander ausgewählt sind aus der Gruppe bestehend aus 1,4-Phenylen, 1,3-Phenylen, Naphthylen und 4,4'-Bisphenylen.

5. Thermoplastische Formmassen nach den Ansprüchen 2 bis 4, wobei die Polyarylenether der Komponente (A) und die funktionalisierten Polyarylenether der Komponente (C) jeweils die gleichen Bausteine der allgemeinen Formel I enthalten.

6. Thermoplastische Formmassen nach den Ansprüchen 2 bis 5, wobei der funktionalisierte Polyarylenether umfassend Carboxylgruppen Bausteine der allgemeinen Formel I sowie Bausteine der allgemeinen Formel II enthält: 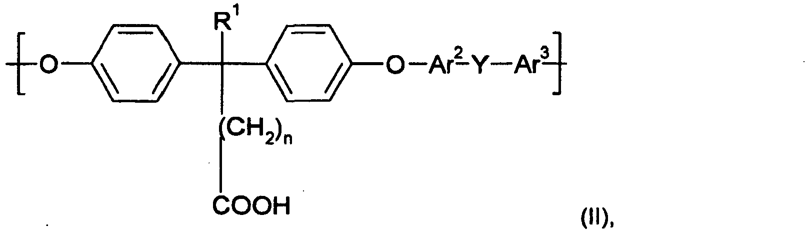 worin
- n = 0, 1, 2, 3, 4, 5 oder 6 ist,
- R¹ Wasserstoff, eine C₁ bis C₆-Alkylgruppe, oder -(CH₂)ₙ-COOH bedeutet,
- Ar² und Ar³ gleich oder unterschiedlich sein können und unabhängig voneinander eine C₆ bis C₁₈-Arylengruppe darstellen und
- Y eine chemische Bindung oder Gruppe wiedergibt, ausgewählt aus -O-, -S-, -SO₂-, S=O, C=O, -N=N- und -CR^{a}R^{b}-, wobei R^{a} und R^{b} gleich oder unterschiedlich sein können und unabhängig voneinander jeweils für ein Wasserstoffatom oder eine C₁-C₁₂-Alkyl-, C₁-C₁₂-Alkoxy- oder C₆-C₁₈-Arylgruppe stehen.

7. Thermoplastische Formmassen nach Anspruch 6, wobei der Anteil von Bausteinen gemäß der allgemeinen Formel II bezogen auf die Summe der Bausteine gemäß Formel I und Formel II von 0,5 bis 3 mol-% beträgt, vorzugsweise von 0,6 bis 2 mol-%.

8. Thermoplastische Formmassen nach den Ansprüchen 6 oder 7, wobei n = 2 und R¹ = Methyl ist.

9. Thermoplastische Formmassen nach den Ansprüchen 6 bis 8, wobei Ar² und Ar³ = 1,4-Phenylen und Y = SO₂ ist.

10. Thermoplastische Formmassen nach den Ansprüchen 1 bis 9, wobei die Polyarylensulfide der Komponente (B) von 30 bis 100 Gew.-% aus Wiederholungseinheiten gemäß der allgemeinen Formel -Ar-S- aufgebaut sind, wobei -Ar- eine Arylengruppe mit 6 bis 18 Kohlenstoffatomen darstellt.

11. Thermoplastische Formmassen nach den Ansprüchen 1 bis 10, wobei Komponente (B) Polyphenylensulfid, vorzugsweise Poly(1,4-phenylensulfid) ist.

12. Thermoplastische Formmassen nach den Ansprüchen 1 bis 11, wobei Komponente (D) aus Glasfasern besteht.

13. Verfahren zur Herstellung von thermoplastischen Formmassen gemäß den Ansprüchen 1 bis 12 umfassend das Vermischen der eingesetzten Komponenten bei erhöhter Temperatur.

14. Verwendung von funktionalisierten Polyarylenethern umfassend Carboxylgruppen mit einer Viskositätszahl gemäß DIN EN ISO 1628-1 von 45 bis 65 ml/g gemessen in 1 gew.-%iger Lösung in N-Methyl-2-pyrrolidon bei 25°C wie in den Ansprüchen 1 bis 12 definiert in Zusammensetzungen gemäß mindestens einem der Ansprüche 1 bis 12 enthaltend mindestens einen Polyarylenether und mindestens ein Polyarylensulfid zur Erhöhung der Reißdehnung oder zur Verbesserung der Schlagzähigkeit.

15. Verwendung der thermoplastischen Formmassen gemäß den Ansprüchen 1 bis 12 zur Herstellung von Formteilen.

## Claims

1. A thermoplastic molding material comprising the following components:
(A) from 20 to 79% by weight of at least one polyarylene ether,
(B) from 5 to 64% by weight of at least one polyarylene sulfide,
(C) from 1 to 15% by weight of at least one functionalized polyarylene ether comprising carboxyl groups having a viscosity number according to DIN EN ISO 1628-1 of 45 to 65 ml/g measured in 1% strength by weight solution in N-methyl-2-pyrrolidone at 25°C,
(D) from 15 to 70% by weight of at least one fibrous or particulate filler and
(E) from 0 to 40% by weight of a further additive and/or processing assistant,
the sum of the % by weight of the components (A) to (E) being 100% by weight.

2. The thermoplastic molding material according to claim 1, the polyarylene ethers of the component (A) being composed of building blocks of the general formula I: 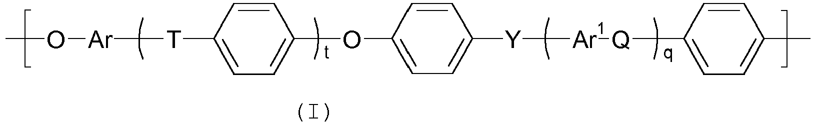 in which the symbols t, q, Q, T, Y, Ar and Ar¹ have the following meanings:
t, q: independently of one another, 0, 1, 2 or 3,
Q, T, Y: independently of one another, in each case a chemical bond or a group selected from -O-, -S-, -SO₂-, S=O, C=O, -N=N-and -CR^{a}R^{b}-, in which R^{a} and R^{b} may be identical or different and, independently of one another, are each a hydrogen atom or a C₁-C₁₂-alkyl, C₁-C₁₂-alkoxy or C₆-C₁₈-aryl group, and in which at least one of Q, T and Y is -SO₂-, and
Ar, Ar¹: independently of one another, an arylene group having 6 to 18 carbon atoms.

3. The thermoplastic molding material according to claim 2, Q, T and Y in formula I, independently of one another, being selected from -O- and -SO₂- and at least one of Q, T and Y is -SO₂-.

4. The thermoplastic molding material according to claim 2 or 3, Ar and Ar¹ in formula I, independently of one another, being selected from the group consisting of 1,4-phenylene, 1,3-phenylene, naphthylene and 4,4'-bisphenylene.

5. The thermoplastic molding material according to claims 2 to 4, the polyarylene ethers of the component (A) and the functionalized polyarylene ethers of the component (C) comprising in each case the same building blocks of the general formula I.

6. The thermoplastic molding material according to claims 2 to 5, where the functionalized polyarylene ether comprising carboxyl groups comprises building blocks of the general formula I and building blocks of the general formula II: 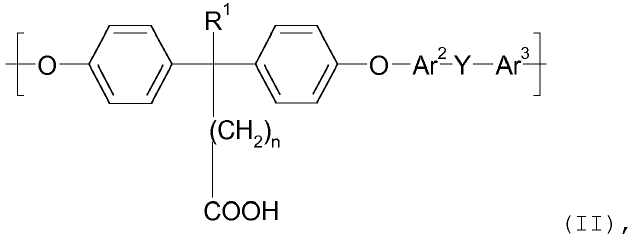 in which
- n is 0, 1, 2, 3, 4, 5 or 6,
- R¹ is hydrogen, a C₁ to C₆-alkyl group, or -(CH₂)ₙ-COOH,
- Ar² and Ar³ may be identical or different and , independently of one another, are a C₆ to C₁₈-arylene group and
- Y represents a chemical bond or group selected from -0-, -S-, -SO₂-, S=O, C=O, -N=N- and -CR^{a}R^{b}-, in which R^{a} and R^{b} may be identical or different and, independently of one another, are each a hydrogen atom or a C₁-C₁₂-alkyl, C₁-C₁₂₋alkoxy or C₆-C₁₈-aryl group.

7. The thermoplastic molding material according to claim 6, the proportion of building blocks according to the general formula II, based on the sum of the building blocks according to formula I and formula II, being from 0.5 to 3 mol%, preferably from 0.6 to 2 mol%.

8. The thermoplastic molding material according to claim 6 or 7, n being 2 and R¹ being methyl.

9. The thermoplastic molding material according to claims 6 to 8, Ar² and Ar³ being 1,4-phenylene and Y being SO₂.

10. The thermoplastic molding material according to claims 1 to 9, the polyarylene sulfides of the component (B) being composed of from 30 to 100% by weight of repeating units according to the general formula -Ar-S-, in which -Ar- is an arylene group having 6 to 18 carbon atoms.

11. The thermoplastic molding material according to claims 1 to 10, component (B) being polyphenylene sulfide, preferably poly(1,4-phenylene sulfide).

12. The thermoplastic molding material according to claims 1 to 11, component (D) consisting of glass fibers.

13. A process for the preparation of thermoplastic molding materials according to claims 1 to 12, comprising the mixing of the components used at elevated temperature.

14. The use of functionalized polyarylene ethers comprising carboxyl groups having a viscosity number according to DIN EN ISO 1628-1 of 45 to 65 ml/g measured in 1% strength by weight solution in N-methyl-2-pyrrolidone at 25°C as defined in claims 1 to 12 in compositions according to at least one of claims 1 to 12 comprising at least one polyarylene ether and at least one polyarylene sulfide for increasing the elongation at break or for improving the impact strength.

15. The use of thermoplastic molding materials according to claims 1 to 12 for the production of shaped articles.

## Revendications

1. Matériaux de moulage thermoplastiques contenant les composants suivants :
(A) de 20 à 79 % en poids d'au moins un éther de polyarylène,
(B) de 5 à 64 % en poids d'au moins un sulfure de polyarylène,
(C) de 1 à 15 % en poids d'au moins un éther de polyarylène fonctionnalisé comprenant des groupes carboxyle, ayant un indice de viscosité selon DIN EN ISO 1628-1 de 45 à 65 ml/g mesuré dans une solution à 1 % en poids dans de la N-méthyl-2-pyrrolidone à 25 °C,
(D) de 15 à 70 % en poids d'au moins une charge fibreuse ou particulaire, et
(E) de 0 à 40 % en poids d'un additif et/ou adjuvant d'usinage supplémentaire,
la somme des % en poids des composants (A) à (E) étant de 100 % en poids.

2. Matériaux de moulage thermoplastiques selon la revendication 1, dans lesquels les éthers de polyarylène du composant (A) sont formés par des constituants de formule générale I : 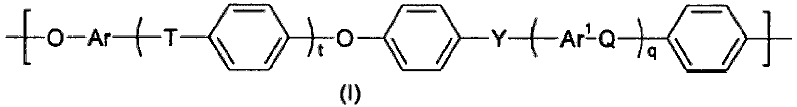 dans laquelle les symboles t, q, Q, T, Y, Ar et Ar¹ ont les significations suivantes :
t, q : indépendamment l'un de l'autre 0, 1, 2 ou 3,
Q, T, Y : chacun indépendamment les uns des autres une liaison chimique ou un groupe choisi parmi -O-, -S-, -SO₂-, S=O, C=O, -N=N- et -CR^{a}R^{b}-, R^{a} et R^{b} pouvant être identiques ou différents et représentant chacun indépendamment l'un de l'autre un atome d'hydrogène ou un groupe alkyle en C₁-C₁₂, alcoxy en C₁-C₁₂ ou aryle en C₆-C₁₈, et Q, T et/ou Y représentant -SO₂-, et
Ar, Ar¹ : indépendamment l'un de l'autre un groupe arylène de 6 à 18 atomes de carbone.

3. Matériaux de moulage thermoplastiques selon la revendication 2, dans lesquels Q, T et Y dans la formule I sont choisis indépendamment les uns des autres parmi -0- et -SO₂-, et Q, T et/ou Y représentent -SO₂-.

4. Matériaux de moulage thermoplastiques selon la revendication 2 ou 3, dans lesquels Ar et Ar¹ dans la formule I sont choisis indépendamment l'un de l'autre dans le groupe constitué par 1,4-phénylène, 1,3-phénylène, naphtylène et 4,4'-bisphénylène.

5. Matériaux de moulage thermoplastiques selon les revendications 2 à 4, dans lesquels l'éther de polyarylène du composant (A) et l'éther de polyarylène fonctionnalisé du composant (C) contiennent chacun les mêmes constituants de formule générale I.

6. Matériaux de moulage thermoplastiques selon les revendications 2 à 5, dans lesquels l'éther de polyarylène fonctionnalisé comprenant des groupes carboxyle contient des constituants de formule générale I, ainsi que des constituants de formule générale II : 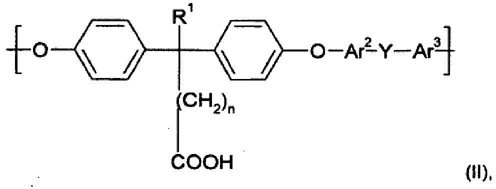 dans laquelle
- n = 0, 1, 2, 3, 4, 5 ou 6,
- R¹ signifie l'hydrogène, un groupe alkyle en C₁ à C₆ ou -(CH₂)ₙ-COOH,
- Ar² et Ar³ peuvent être identiques ou différents et représentent indépendamment l'un de l'autre un groupe arylène en C₆ à C₁₈, et
- Y représente une liaison chimique ou un groupe choisi parmi -O-, -S-, -SO₂-, S=O, C=O, -N=N- et -CR^{a}R^{b}-, R^{a} et R^{b} pouvant être identiques ou différents et représentant chacun indépendamment l'un de l'autre un atome d' hydrogène ou un groupe alkyle en C₁-C₁₂, alcoxy en C₁-C₁₂ ou aryle en C₆-C₁₈.

7. Matériaux de moulage thermoplastiques selon la revendication 6, dans lesquels la proportion de constituants selon la formule générale II par rapport à la somme des constituants selon la formule I et la formule II est de 0,5 à 3 % en moles, de préférence de 0,6 à 2 % en moles.

8. Matériaux de moulage thermoplastiques selon la revendication 6 ou 7, dans lesquels n = 2 et R¹ = méthyle.

9. Matériaux de moulage thermoplastiques selon les revendications 6 à 8, dans lesquels Ar² et Ar³ = 1,4-phénylène et Y = SO₂.

10. Matériaux de moulage thermoplastiques selon les revendications 1 à 9, dans lesquels les sulfures de polyarylène du composant (B) sont constitués par 30 à 100 % en poids d'unités de répétition selon la formule générale -Ar-S-, -Ar- représentant un groupe arylène de 6 à 18 atomes de carbone.

11. Matériaux de moulage thermoplastiques selon les revendications 1 à 10, dans lesquels le composant (B) est le sulfure de polyphénylène, de préférence le poly(sulfure de 1,4-phénylène).

12. Matériaux de moulage thermoplastiques selon les revendications 1 à 11, dans lesquels le composant (D) est constitué de fibres de verre.

13. Procédé de fabrication de matériaux de moulage thermoplastiques selon les revendications 1 à 12, comprenant le mélange des composants utilisés à température élevée.

14. Utilisation d'éthers de polyarylène fonctionnalisés comprenant des groupes carboxyle, ayant un indice de viscosité selon DIN EN ISO 1628-1 de 45 à 65 ml/g mesuré dans une solution à 1 % en poids dans de la N-méthyl-2-pyrrolidone à 25 °C, tels que définis dans les revendications 1 à 12, dans des compositions selon au moins l'une quelconque des revendications 1 à 12, contenant au moins un éther de polyarylène et au moins un sulfure de polyarylène pour augmenter l'allongement à la rupture ou pour améliorer la résistance au choc.

15. Utilisation des matériaux de moulage thermoplastiques selon les revendications 1 à 12 pour la fabrication de pièces moulées.
